# EUROPÄISCHE PATENTSCHRIFT

(11) **EP 4 129 043 B1**
(45) Veröffentlichungstag und Bekanntmachung des Hinweises auf die Patenterteilung: **27.11.2024**
(21) Anmeldenummer: 22186461.4
(22) Anmeldetag: 22.07.2022
(51) Int. Cl.: A01D 84/00

(54) **HEUWERBUNGSMASCHINE**
HAY-MAKING MACHINE
MACHINE À FANER

(30) Priorität: 05.08.2021 DE 102021120367
(43) Veröffentlichungstag der Anmeldung: 08.02.2023
(73) Patentinhaber: Pöttinger Landtechnik GmbH, 4710 Grieskirchen (AT)
(72) Erfinder: MAIR, Andreas, 4710 Grieskirchen (AT); ZAUNER, Günter, 4710 Grieskirchen (AT); JUNGREITHMAYER, Martin, 4710 Grieskirchen (AT)
(74) Vertreter: Thoma, Michael

(56) Entgegenhaltungen:
- EP-A1- 2 962 540
- EP-A1- 3 066 910
- WO-A1-2020/222664

## Beschreibung

Die vorliegende Erfindung betrifft eine Heuwerbungsmaschine in Form eines Mergers zum Schwaden und/oder Querversetzen von Erntegut, mit zumindest zwei Mergereinheiten, die jeweils einen Aufsammelförderer zum Aufsammeln des Ernteguts vom Boden und einen Querförderer zum Querfördern des aufgesammelten Ernteguts quer zur Fahrtrichtung umfassen, wobei die Mergereinheiten jeweils um eine liegende, in Fahrtrichtung weisende Pendelachse zur Bodenanpassung pendelnd aufgehängt sind und wobei zumindest eine der Mergereinheiten zur wahlweisen Ablage eines Seitenschwads oder eines Mittenschwads quer zur Fahrtrichtung verstellbar aufgehängt ist.

Merger, die wahlweise Seitenschwade oder einen Mittenschwad ablegen können, sind beispielsweise aus den Schriften EP 2 962 540 A1 oder WO 2020/222664 A1 bekannt, wobei die erstgenannte EP 2 962 540 A1 vorschlägt, zwei Querförderbänder relativ zu einer durchgängig bleibenden Pickup seitlich auseinander zu fahren, um einen Mittenschwad abzulegen, der von den beiden auseinander gefahrenen Querförderbändern sowie direkt auch von dem zusammenbleibenden Mittelabschnitt der Pickup beschickt wird. Im Gegensatz hierzu schlägt die zweitgenannte WO 2020/222664 A1 vor, zwischen zwei seitlichen Mergereinheiten eine dritte, schmalere Mergereinheit in der Mitte vorzusehen, welche in eine inaktive Stellung nach oben weggefahren werden kann, um dann nur noch mit den beiden seitlichen Mergereinheiten einen Mittenschwad ablegen zu können. Ferner zeigt die Schrift EP 3066910 A1 einen Mähdrescher mit einem Erntevorsatz, der zwei Seitenflügel aufweist, die über eine Parallelogrammlenker-Aufhängung nach oben über einen Mittelflügel wegschwenkbar und seitlich nach außen neben den Mittelflügel in eine Arbeitsstellung schwenkbar sind, wobei an den Seitenflügeln einerseits und den Mittelflügel andererseits jeweils Kupplungshälften starr montiert sind, welche beim Zusammenfahren der Seitenflügel mit dem Mittelflügel jeweils eine gelenkige Verbindung ergeben.

Solche Merger sind üblicherweise an einem Schlepper anbaubare Anbaugeräte, die halm- oder blattförmiges Erntegut wie beispielsweise geschnittenes Gras, Heu oder Stroh vom Boden aufsammeln und in Schwaden ablegen können. Anders als bei Rechkreiselschwadern wird dabei das Erntegut nicht direkt auf dem Boden liegend zu einem Schwad zusammengerecht, sondern zunächst vom Boden aufgesammelt und erst dann quergefördert, um in einem Schwad abgelegt zu werden. Der Aufsammelförderer kann dabei ein Zinkenförderer mit umlaufend antreibbaren Vorderzinken sein, insbesondere in Form einer sogenannten Pick-up mit einer Stachelwalze, bei der Förderzinken zwischen Abstreiferblechen hervorstehen und auf ringförmigen Umlaufbahnen in aufrechten Umlaufbahnen gesteuert oder ungesteuert angetrieben werden. Der Querförderer solcher Merger kann als Umlaufförderer mit einem endlos umlaufenden Fördermittel, insbesondere in Form eines Bandförderers ausgebildet sein, vgl. beispielsweise EP 3 058 804 B1 oder DE 10 2010 010 862 A1. Anstelle eines endlos umlaufenden Förderbands kann auch ein Förderboden vorgesehen sein, über den separate Förderwerkzeuge in Querförderrichtung hinwegstreichen, vgl. EP 0 255 458 A1. Solche Merger zeichnen sich durch eine hohe Futter- bzw. Erntegutqualität aus, da Verunreinigungen wie Steine oder Erdklumpen weniger leicht in den Schwad gelangen, wenn das Erntegut vor dem Querfördern zunächst vom Boden angehoben wird.

Um größere Arbeitsbreiten zu ermöglichen, gleichzeitig aber eine gute Bodenanpassung bei unebenem Boden zu ermöglichen und auch den Straßentransport sicherzustellen, kann die Arbeitsbreite des Mergers in mehreren Mergereinheiten unterteilt sein, die quer zur Fahrtrichtung nebeneinander angeordnet sind und individuell verkippen bzw. pendeln können, um sich den Bodenunebenheiten anpassen zu können. Für den Straßentransport können die Mergereinheiten gegebenenfalls aus der liegenden Arbeitsstellung in eine aufrechte Transportstellung verschwenkt werden, um die zulässige Transportbreite einzuhalten, wobei eine oder mehrere Mergereinheiten gegebenenfalls auch nur ausreichend weit ausgehoben und gegebenenfalls verschwenkt werden können, um den Transport zu erlauben. Zwischenstellungen können dabei auch für das Vorgewende genutzt werden.

Zum anderen ermöglicht die Unterteilung in mehreren nebeneinander angeordneten Merger-Einheiten, aber auch ein wahlweises Ablegen eines Seitenschwads und eines Mittenschwads, wobei hierzu die Mergereinheiten zusammengefahren bzw. auseinandergefahren werden können und zumindest eine der Mergereinheiten einen richtungsumkehrbaren Förderantrieb besitzt. Soll ein Mittenschwad abgelegt werden, werden die beiden Mergereinheiten quer zur Fahrtrichtung auseinandergefahren, so dass zwischen den Mergereinheiten ein Ablagespalt entsteht, wobei die Mergereinheiten zueinander gegenläufig angetrieben werden, so dass das Erntegut von beiden Mergereinheiten auf die Mitte zu gefördert und im dort vorgesehenen Ablagespalt abgelegt wird. Um andererseits einen Seitenschwad abzulegen, werden die beiden Mergereinheiten zusammengefahren und in die gleiche Richtung fördernd angetrieben, so dass die eine Mergereinheit "ihr" Erntegut auf die andere Mergereinheit übergibt, welche das übernommene Erntegut - zusammen mit dem vom eigenen Aufsammelförderer herkommenden Erntegut - weiter querfördert und dann am äußeren seitlichen Ende ablegt. Einen Merger mit querverstellbaren Mergereinheiten zeigt beispielsweise die Schrift EP 3 058 804 B1. Einen ähnlichen Schwadleger mit querverstellbaren Förderbändern zeigt auch die Schrift DD 136917 B.

Im zusammengefahrenen Zustand, wenn ein Seitenschwad abgelegt werden soll, kann es zu Übergabeproblemen kommen, wenn die Mergereinheiten individuell pendelnd aufgehängt sind und sich die Mergereinheiten an ihren einander zugewandten Endabschnitten, die die Übergabeschnittstelle bilden, auseinanderbewegen bzw. durch Bodenunebenheiten unterschiedlich stark auf und abwippen und sich hierdurch ein treppenartiger Höhenversatz ergibt. Ein solcher Pendelversatz an der Übergabeschnittstelle wird insbesondere dann kritisch, wenn die übergebende Mergereinheit an der Übergabeschnittstelle tiefer liegt als die übernehmende Mergereinheit, da das zu übergebende Erntegut sozusagen eine Stufe bergauf gefördert werden müsste. Je nach Größe des Pendelversatzes kann es zu einem Übergabestau bzw. Materialanhäufungen, aber auch zu Materialverlusten bzw. Fallenlassen des Ernteguts kommen, wenn das zu übergebende Erntegut es nicht auf den übernehmenden Querförderer schafft, sondern im entstehenden Spalt unter diesem hindurchfällt.

Um bei individuell pendelnden Mergereinheiten solche Übergabeprobleme zu vermeiden, schlägt die Schrift EP 2 731 414 B1 vor, die benachbarten Mergereinheiten an der Übergabeschnittstelle miteinander gelenkig zu verbinden, so dass die Querfördereinheiten nicht mehr unabhängig voneinander pendeln bzw. auf- und abwippen können, sondern an der Übergabeschnittstelle auf etwa gleicher Höhe gehalten werden. Hierzu sind an den einander gegenüberliegenden Endabschnitten der Mergereinheiten ein Finger und eine gabelförmige Fingeraufnahme jeweils starr befestigt, um die Mergereinheiten an der Übergabeschnittstelle in vertikaler Richtung aneinander zu führen, gleichzeitig aber durch die Pendelbewegungen entstehenden Querversatz ausgleichen zu können.

Bei auseinander- und zusammenfahrbaren Mergereinheiten für die wahlweise Mitten- und Seitenschwadablage ist ein solches Verbindungsgelenk jedoch mühsam handzuhaben. Entweder muss ein Gelenkbolzen für das Auseinanderfahren demontiert und nach dem Zusammenfahren diffizil wieder eingefädelt werden, oder es müssen die Mergereinheiten beim Zusammenfahren exakt auf dasselbe Höhenniveau ausgerichtet werden, was angesichts der pendelnden Aufhängung kaum möglich ist bzw. einen Zweimannbetrieb mit einem Helfer am Gerät erfordert.

Der vorliegenden Erfindung liegt daher die Aufgabe zugrunde, eine verbesserte Heuwerbungsmaschine der genannten Art zu schaffen, die Nachteile des Stands der Technik vermeidet und letzteren in vorteilhafter Weise weiterbildet. Insbesondere soll ein einfaches Umstellen vom Seitenschwad auf Mittenschwad ermöglicht werden, ohne hierfür eine verlässliche, verlustfreie Futterübergabe in der zusammengefahrenen Stellung für den Seitenschwad zu opfern.

Erfindungsgemäß wird die genannte Aufgabe durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, zwischen den Mergereinheiten im Bereich der Übergabeschnittstelle ein ein- und auskuppelbares Gelenk mit zumindest einer verstellbaren Kupplungshälfte vorzusehen, die an einer der Mergereinheiten beweglich zwischen einer Einkuppel- und einer Auskuppelstellung gelagert ist, um durch Verstellen des Kupplungsteils relativ zu der Mergereinheit, an der sie befestigt ist, die Gelenkverbindung zu schließen und zu öffnen. Erfindungsgemäß ist zwischen den Mergereinheiten ein ein- und auskuppelbares Gelenk mit zwei in und außer Eingriff bringbaren Kupplungsteilen vorgesehen, von denen zumindest ein Kupplungsteil an einer der Mergereinheiten beweglich zwischen einer Kuppelstellung und einer Abkuppelstellung gelagert ist. Durch die verstellbare Ausbildung einer Kupplungshälfte gestaltet sich insbesondere das Verbinden der beiden Mergereinheiten für die Seitenschwadablage deutlich einfacher, da das verbindende Gelenk einfacher geschlossen werden kann, auch wenn die Mergereinheiten für die Seitenschwadablage bereits zusammengefahren sind und nicht vollständig passgenau fluchten. Anders als bei Gelenkverbindungen mit zwei starr montierten Gelenkhälften kann durch die Verstellbewegung der Kupplungshälfte relativ zur entsprechenden Mergereinheit die ankuppelnde Eingriffsstellung leichter erreicht werden. Zudem können die Kupplungsteile in der Abkuppelstellung aus dem Ablagebereich des Mittenschwads herausbewegt werden, um ein Verheddern des im Mittenschwad abzulegenden Ernteguts an vorstehenden Kupplungsteilen zu vermeiden.

In Weiterbildung der Erfindung kann die verstellbare Kupplungshälfte motorisch betätigt werden, um die Kupplungshälfte von der ausgekuppelten Stellung in die kuppelnde Stellung zu verfahren bzw. umgekehrt aus der gekuppelten Stellung in die ausgekuppelte Stellung zu verfahren. In Weiterbildung der Erfindung ist ein Stellaktor zum Verstellen der Kupplungshälfte relativ zu der Mergereinheit, an der die Kupplungshälfte beweglich gelagert ist, vorgesehen. Hierdurch kann die Gelenkverbindung zwischen den Mergereinheiten bei einer Umkonfiguration von Mittenschwad auf Seitenschwad bzw. umgekehrt von Seitenschwad auf Mittenschwad getrennt bzw. geschlossen werden, ohne große manuelle Kräfte aufwenden zu müssen.

Ein solcher Stellaktor kann grundsätzlich verschieden ausgebildet sein, wobei vorzugsweise ein elektrischer oder hydraulischer Stellaktor beispielsweise in Form eines Elektromotors oder eines Hydraulikmotors für die Verstellung der Kupplungshälfte vorgesehen sein kann. Insbesondere kann in vorteilhafter Weiterbildung der Erfindung auch ein Druckmittelaktor, insbesondere eine Hydraulikzylindereinheit vorgesehen sein, um die genannte Kupplungshälfte zwischen ihrer Auskuppelstellung und ihrer Einkuppelstellung verfahren bzw. bewegen und mit der anderen Kupplungshälfte in Eingriff bringen zu können. Durch die Verwendung eines Hydraulikzylinders kann eine einfache Anbindung an die bei vielen Heuwerbungsmaschinen bzw. den Schleppern, an denen die Heuwerbungsmaschinen angebaut werden, vorhandene Hydraulikversorgung erzielt werden.

Grundsätzlich wäre es aber auch möglich, eine manuelle Verstellung der Kupplungshälfte vorzusehen, zu der dann der Maschinenführer absteigen bzw. ein Helfer an der Übergabeschnittstelle zwischen den Mergereinheiten Hand anlegen könnte. Gegebenenfalls kann eine solche manuelle Betätigbarkeit als zusätzliche Betätigungsoption vorgesehen sein, um bei einem Ausfall der Hydraulik- bzw. Energieversorgung dennoch eine Betätigung der Kupplung und ein Trennen oder Schließen der Gelenkverbindung bewirken zu können. Beispielsweise kann der genannte Stellaktor hierfür in einen Leerlaufmodus geschaltet oder abgekuppelt werden. Um bei einer solchen manuellen Betätigung keine übermäßigen Kräfte aufwenden zu können, kann es vorteilhaft sein, einen kraftübersetzenden Stellhebelmechanismus an dem verstellbaren Kupplungsteil anzubringen, um mit einer begrenzten manuellen Kraft eine hohe Stellkraft auf das Kupplungsteil ausüben zu können.

Der genannte Stellaktor kann in vorteilhafter Weiterbildung der Erfindung doppeltwirkend ausgebildet sein, um das verstellbare Kupplungsteil sowohl in die Kuppelstellung als auch in die Abkuppelstellung aktiv bzw. motorisch verfahren zu können. Mit Hilfe eines solchen doppeltwirkenden Stellaktors, beispielsweise einem doppelt wirkenden Druckmittel- bzw. Hydraulikzylinder kann die beweglich gelagerte Kupplungshälfte in entgegengesetzte Richtungen gezielt und gesteuert verfahren bzw. verstellt werden, um die gelenkige Verbindung zu schließen bzw. wahlweise zu öffnen.

Dabei sind Ausbildungen möglich, dass beide Stellrichtungen beispielsweise hydraulisch oder elektrisch bewirkt werden. Alternativ oder zusätzlich sind aber auch Mischformen möglich, bei denen eine Stellrichtung beispielsweise durch Federvorspannung bewirkt werden kann und die entgegengesetzte Stellrichtung durch das Druckmittel bewerkstelligt wird

Grundsätzlich wäre es möglich, beide Kupplungsteile des die Mergereinheiten verbindenden Gelenks beweglich an der jeweiligen Mergereinheit zu lagern. Vorteilhafterweise ist aber nur eines der Kupplungsteile an seiner Mergereinheit beweglich gelagert, während das andere Kupplungsteil an seiner Mergereinheit starr befestigt ist. Hierdurch wird einerseits die Struktur des ein- und auskuppelbaren Gelenks einfach gehalten, andererseits vereinfacht sich auch die Betätigung beim Ein- und Abkuppeln.

Das verstellbare Kupplungsteil kann grundsätzlich in verschiedener Art und Weise an der jeweiligen Mergereinheit verstellbar gelagert sein, um die Bewegung zwischen den An- und Abkuppelstellungen zu ermöglichen. Beispielsweise könnte das Kupplungsteil verschwenkbar an der Mergereinheit gelagert sein, um eine kreisbahnförmige oder eine bogenförmige Kupplungsbewegung auszuführen.

Alternativ oder zusätzlich kann das verstellbare Kupplungsteil aber auch mittels einer Schiebeführung linear verstellbar sein bzw. verschieblich gelagert sein, um an das zusammenwirkende andere Kupplungsteil angekuppelt bzw. davon abgekuppelt werden zu können. Insbesondere kann eine solche Schiebeführung eine zumindest näherungsweise lineare Verschiebebewegung in einer Richtung vorsehen, die auf das andere Kupplungsteil zu bzw. von diesem weggerichtet ist. Vorteilhafterweise kann das verstellbare Kupplungsteil, wenn die Mergereinheiten bestimmungsgemäß für eine Seitenschwadablage aneinander gefahren sind, in einer Richtung liegend quer zur Fahrtrichtung verschieblich gelagert sein.

In vorteilhafter Weiterbildung der Erfindung kann die Verstellbarkeit der Kupplung dazu ausgebildet sein, ein Vorspringen der Kupplungsteile über die Konturen der Mergereinheit hinaus in der Abkuppelstellung zu vermeiden, zumindest in Richtung des abzulegenden Mittenschwads. Insbesondere können die Kupplungsteile in der Abkuppelstellung in Fahrtrichtung betrachtet innerhalb der Konturen der zugehörigen Mergereinheiten sozusagen versteckt angeordnet werden, um die Ablage eines Mittenschwads nicht zu behindern und zu vermeiden, dass sich Erntegut an vorstehenden Kupplungsteilen verheddert. Insbesondere kann das genannte verstellbare Kupplungsteil zwischen einer vorspringenden Kupplungsstellung, in der das Kupplungsteil über "seine" Mergereinheit zur benachbarten, anzukuppelnden Mergereinheit hin vorspringt, und einer nicht vorspringenden Abkuppelstellung, in der das Kupplungsteil nicht über seine Mergereinheit hinaus zum Ablagebereich des Mittenschwads vorspringt. Im gekuppelten Zustand stört das Vorspringen nicht bzw. ist dies sogar erforderlich bzw. zumindest hilfreich, um den Kupplungseingriff zu erzielen, da in der gekuppelten Stellung das Erntegut über die Schnittstelle zwischen den Mergereinheiten hinweg transportiert wird. In der auseinandergefahrenen Stellung der Mergereinheiten jedoch, wenn zwischen den Mergereinheiten ein Mittenschwad abgelegt werden soll, kann die zurückgefahrene bzw. Abkuppelstellung ein Verheddern des im Mittenschwad abgelegten Ernteguts vermeiden.

Die beiden Kupplungsteile sind vorteilhafterweise formschlüssig verriegelnd ausgebildet. Beispielsweise kann eines der Kupplungsteile ein zu einer Seite hin offenes Kupplungsmaul aufweisen, in das das andere Kupplungsteil, das beispielsweise eine Kupplungsklaue oder einen Kupplungsfinger aufweisen kann, einfahrbar ist. Ein solches Kupplungsmaul kann in der bestimmungsgemäßen Arbeitsstellung der beiden Mergereinheiten für die Seitenablage stehend so ausgerichtet sein, dass das Maul zur gegenüberliegenden Mergereinheit hin offen ist und die zur Maulöffnung hin führenden Schenkel des Kupplungsmauls liegend ausgerichtet, insbesondere übereinander angeordnet sind, so dass das damit zusammenwirkende andere Kupplungsteil zwischen die besagten Schenkel einfahrbar ist und in der eingefahrenen Stellung in vertikaler Richtung in dem Maul gefangen ist, liegend quer zur Fahrtrichtung aber Spiel hat.

Vorteilhafterweise sind die Kupplungsteile derart ausgebildet, dass das Gelenk zwischen den Mergereinheiten in einer Richtung liegend quer zur Fahrtrichtung Spiel aufweist, um bei Pendelbewegungen der Mergereinheiten auftretende Relativbewegungen kompensieren bzw. zulassen zu können. In vertikaler Richtung können die Kupplungsteile spielfrei oder mit nur relativ geringem Spiel ineinandergreifen, um die beiden Mergereinheiten an der Übergabeschnittstelle zumindest näherungsweise auch bei Pendelbewegungen auf demselben Höhenniveau zu halten bzw. zumindest einen größeren Höhenversatz zu vermeiden.

Eine Steuervorrichtung zum Steuern der An- und Abkuppelbewegung kann den Stellaktor vollautomatisch oder halbautomatisch betätigen, wobei eine solche Steuervorrichtung beispielsweise von einem Maschinenführerstand aus über ein entsprechendes Eingabemittel angesteuert werden kann.

Alternativ oder zusätzlich kann die Steuervorrichtung aber auch sensorgesteuert arbeiten, wobei zumindest ein Sensor einen Maschinen- und/oder Betriebsparameter erfassen kann, der eine Seitenschwadablage anzeigt und/oder vorliegt, wenn die Heuwerbungsmaschine in ihrer zusammengefahrenen Konfiguration für die Seitenschwadablage ist.

Beispielsweise kann ein solcher Sensor das Vorliegen eines Seitenschwads, der von einem äußeren Ende einer der beiden Mergereinheiten abgelegt wird, erfassen, wobei der Sensor hierfür beispielsweise visuell arbeitend ausgebildet sein kann oder den Seitenschwad auch per Ultraschall abtasten kann. Alternativ oder zusätzlich kann auch ein Sensor vorgesehen sein, der die Position der Mergereinheiten relativ zueinander erfasst, insbesondere wenn diese in einem zusammengefahrenen Zustand sind. Beispielsweise kann ein solcher Sensor das Spaltmaß zwischen den beiden Mergereinheiten und/oder insbesondere auch die Lage der Kupplungsteile relativ zueinander erfassen.

Alternativ oder zusätzlich kann auch ein Sensor vorgesehen sein, der eine Stellung und/oder einen Druck der Querverstelleinrichtung erfasst.

Zeigt ein Sensorsignal des zumindest einen Sensors an, dass die Maschine in Seitenschwadablage arbeitet bzw. dafür bereit ist, kann die Steuervorrichtung den Stellaktor ansteuern, um die Kupplungsteile und zusammenzufahren und die Mergereinheiten über das Gelenk miteinander zu verbinden.

Je nach Ausbildung des Stellaktors kann dieser beispielsweise über ein Schaltventil betätigt und gesteuert werden. Bei elektrischer Ausbildung kann der Stellaktor beispielsweise durch einen elektrischen Schaltkreis oder einen Schalter gesteuert werden.

Gegebenenfalls kann der Stellaktor auch durch eine Folgesteuerung angesteuert bzw. betätigt werden, die in Abhängigkeit eines Druckzustands der Querverstelleinrichtung arbeitet. Beispielsweise kann der Stellaktor an die Druckversorgung der Querverstelleinrichtung angebunden werden, insbesondere dergestalt, dass dann, wenn die Querverstellaktoren bei Erreichen der zusammengefahrenen Stellung einen Druckanstieg erfahren, dieser Druckanstieg zu einer Betätigung des Stellaktors führt, um die Kupplungsteile und zu schließen.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Heckansicht einer Heuwerbungsmaschine in Form eines Mergers mit zwei nebeneinanderliegend angeordneten Mergereinheiten gemäß einer vorteilhaften Ausführung der Erfindung, wobei die beiden Mergereinheiten für eine Seitenschwadablage zusammengefahren und durch ein Gelenk im Bereich der Übergabeschnittstelle miteinander gelenkig verbunden sind,
- Fig. 2:: eine Heckansicht der Heuwerbungsmaschine aus Fig. 1, die die miteinander gelenkig gekuppelten Mergereinheiten auf gleichem Höhenniveau zeigt,
- Fig. 3:: eine perspektivische, ausschnittsweise Darstellung des ein- und auskuppelbaren Gelenks zwischen den beiden Mergereinheiten in einer eingekuppelten Stellung, und
- Fig. 4:: eine ausschnittsweise Darstellung des ein- und auskuppelbaren Gelenks zwischen den Mergereinheiten, die die Schiebeführung eines Kupplungsteils und dem zugeordneten Stellaktor zum Verstellen des Kupplungsteils zeigt.

Wie die Figuren zeigen, kann die Heuwerbungsmaschine 1 als Anbaugerät ausgebildet sein, das an einen nicht eigens dargestellten Schlepper anbaubar ist, beispielsweise mittels eines Anbaubocks und einer Dreipunktanlenkung oder auch über eine Deichsel, wobei die Heuwerbungsmaschine beispielsweise über ein Fahrwerk 2 am Boden abgestützt sein kann.

Die Heuwerbungmaschine 1 umfasst dabei mehrere Mergereinheiten 3, die jeweils einen Aufsammelförderer 4 aufweisen, der am Boden liegendes Erntegut aufsammelt und einen Querförderer 5 übergibt, der das aufgesammelte Erntegut quer zur Fahrtrichtung 6 fördert und in einem Schwad wieder am Boden ablegt.

Die genannten Mergereinheiten 3 sind dabei insgesamt betrachtet in der Arbeitsstellung liegend ausgerichtet und erstrecken sich mit ihrer länglichen Kontur quer zur genannten Fahrtrichtung 6. Der genannte Aufsammelförderer 4 kann einen Stachelrotor umfassen, der um eine liegende Querachse rotatorisch antreibbar ist, wobei die Stacheln entlang der Umlaufbahn gesteuert oder auch ungesteuert sein können, wie dies bei Pickups an sich bekannt ist. Der dem genannten Aufsammelförderer 4 jeweils nachlaufende Querförderer 5 kann beispielsweise als Bandförderer mit einem endlos umlaufenden Förderband ausgebildet sein. Alternativ kann der genannte Querförderer 5 aber auch eine Querförderschnecke aufweisen, die das aufgesammelte Erntegut querfördert und in einem Schwad ablegt.

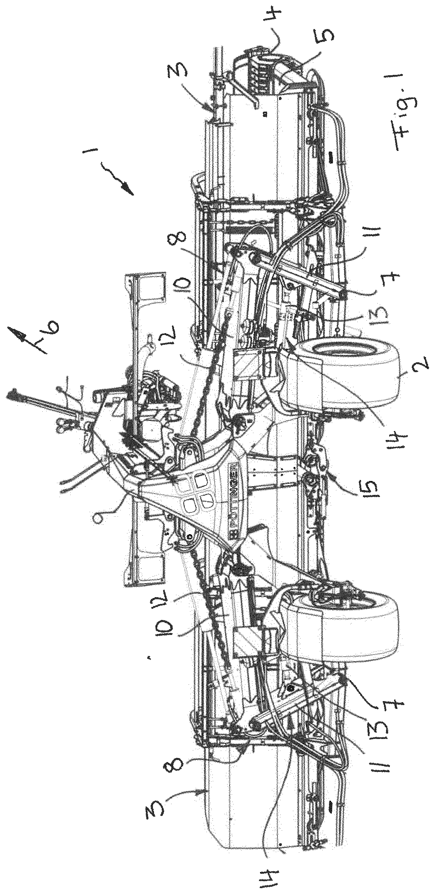

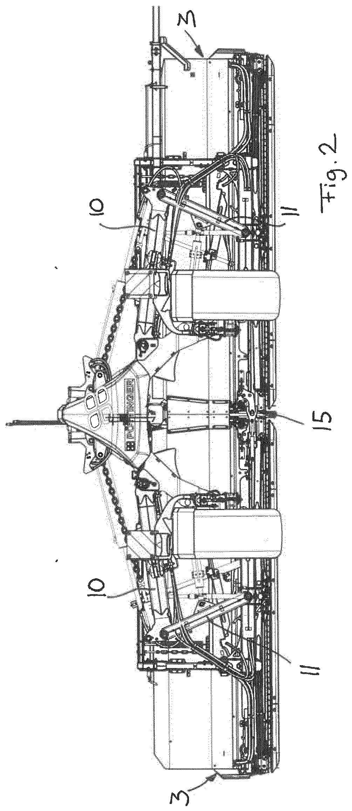

Wie die Figuren 1 und 2 zeigen, sind die Mergereinheiten 3 jeweils pendelnd um eine Pendelachse 7 aufgehängt, die sich liegend näherungsweise fahrtrichtungsparallel erstreckt und auf Höhe bzw. im Bereich der Querförderer 5 vorgesehen sein kann, vorzugsweise etwa mittig, um ein leichtfüßiges Pendeln und eine feinfühlige Bodenanpassung an geneigte oder wellige Bodenkonturen zu ermöglichen.

Wie die Figuren 1 und 2 zeigen, kann die Aufhängung 8 der Mergereinheiten 3 von einem Maschinenrahmen 9 auskragende Tragarme 10 aufweisen, an denen die Mergereinheiten 3 mittels eines Tragrahmens bzw. eines Aufhängungslenkers 11 aufgehängt sind, vgl. Figur 1.

Die genannten Tragarme 10 können um liegende, näherungsweise fahrtrichtungsparallele Schwenkachsen auf- und niedergewippt werden, um die Mergereinheiten 3 aus der in den Figuren dargestellten, abgesenkten Arbeitsposition in eine aufrechte Vorgewende- bzw. Straßentransportstellung verbringen zu können. Hierzu können Aushubaktoren 12 vorgesehen sein, die am Maschinenrahmen 9 und dem jeweiligen Tragarm 10 angreifen. Gegebenenfalls kann auch eine Gewichtsentlastung 12 die Tragarme 10 nach oben ziehen, um die Mergereinheiten zu entlasten und eine leichtfüßige Bodenanpassung zu ermöglichen.

Die genannten Aufhängungslenker 11, mit denen die Mergereinheiten 3 an den Tragarmen 10 aufgehängt sind, können an den Tragarmen 10 ebenfalls um liegende, näherungsweise fahrtrichtungsparallele Schwenkachsen schwenkbar gelagert sein, um die genannten Aufhängungslenker 11 weiter nach innen bzw. weiter nach außen verschwenken zu können, um die Mergereinheiten für eine Seitenschwadablage zusammenfahren und für eine Mittenschwadablage auseinanderfahren zu können. Hierzu können Querverstell-Aktoren 13 beispielsweise in Form von Hydraulikzylindern vorgesehen sein, die zusammen mit den Aufhängungslenkern 11 eine Querverstellungseinrichtung 14 bilden, mittels derer die Mergereinheiten 3 zusammengefahren und auseinandergefahren werden können, um wahlweise einen Seitenschwad oder einen Mittenschwad abzulegen.

Um in der zusammengefahrenen Stellung für eine Seitenschwadablage einen unerwünschten Versatz zwischen den beiden Mergereinheiten 3 im Bereich der Übergabeschnittstelle zu verhindern, ist zwischen den Mergereinheiten 3 ein ein- und auskuppelbares Gelenk 15 vorgesehen, das zwar ein Abknicken der Mergereinheiten 3 relativ zueinander und damit Pendelbewegungen der Mergereinheiten 3 um ihre jeweilige Pendel-Aufhängungsachse 7 zulässt, andererseits aber einen Höhenversatz der Mergereinheiten 3 relativ zueinander im Bereich der Übergabeschnittstelle 16 verhindert bzw. begrenzt, um einen Futterstau oder gar Futterverluste im Übergabebereich zu verhindern.

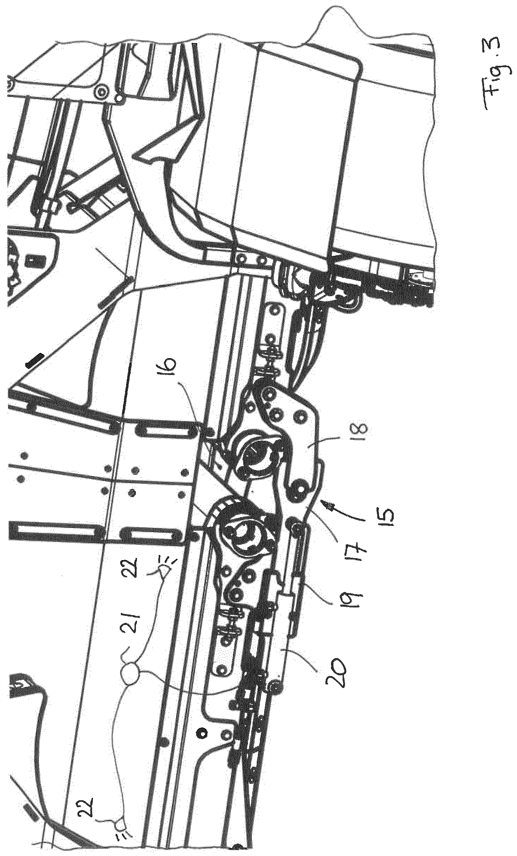

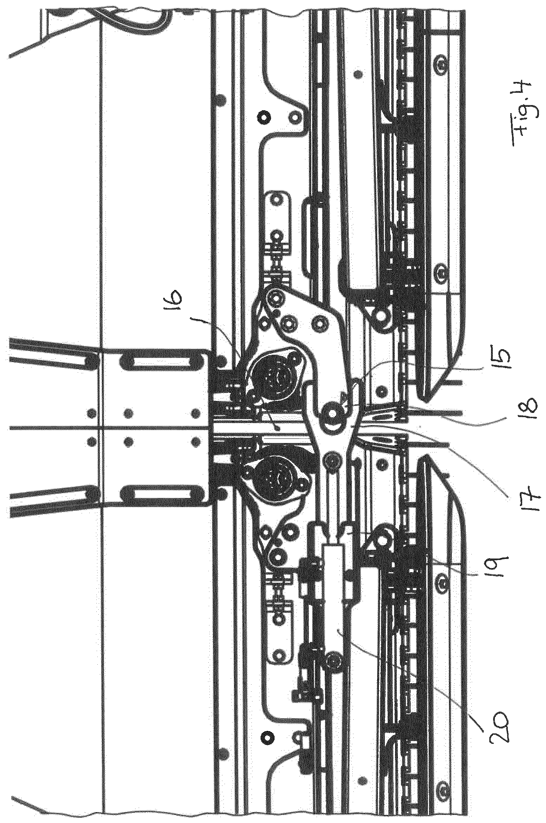

Das genannte Gelenk 15 kann in seiner eingekuppelten Stellung die beiden Mergereinheiten 3 in vertikaler Richtung relativ zueinander spielfrei oder nur mit recht begrenztem Spiel aneinanderhalten, sodass die Förderflächen im Übergabebereich der Mergereinheiten 3 näherungsweise auf gleichem Höhenniveau sind, so wie dies die Figuren 3 und 4 zeigen. Andererseits kann das Gelenk 15 vorteilhafterweise in einer Richtung liegend quer zur Fahrtrichtung und/oder in einer liegenden Ebene nachgiebig ausgebildet sein oder Spiel besitzen bzw. Bewegungen der Kupplungshälften relativ zueinander zulassen, um bei den Pendelbewegungen der Mergereinheiten 3 auftretenden Querversatz ausgleichen zu können.

Wie die Figuren 3 und 4 zeigen, umfasst das genannte Gelenk 15 zwei Kupplungshälften 17 und 18 bzw. -teile, die formschlüssig miteinander in Eingriff bringbar sind, um die gelenkige Verbindung zwischen den beiden Mergereinheiten 3 zu schließen, und andererseits außer Eingriff bringbar sind, um die gelenkige Verbindung zu trennen.

Vorteilhafterweise kann eines der Kupplungsteile 17 eine Kupplungsgabel bzw. ein Kupplungsmaul aufweisen, die/das zum gegenüberliegenden Kupplungsteil 18 hin offen ist, vgl. Figur 3 und 4. Das Kupplungsmaul kann zu einer Unterseite und einer Oberseite hin durch liegend ausgerichtete Schenkel begrenzt sein, zwischen die das gegenüberliegende Kupplungsteil 18 einfahrbar ist, welches beispielsweise einen Kupplungsfinger oder eine Kupplungsklaue aufweisen kann, die zumindest einigermaßen passgenau in die Kupplungsgabel bzw. das Kupplungsmaul des anderen Kupplungsteils einfahrbar ist.

Eines der Kupplungsteile 18 kann starr an "seiner" Mergereinheit 3 montiert sein, während das andere Kupplungsteil 17 an "seiner" Mergereinheit 3 beweglich gelagert ist, um zwischen einer ankuppelnden und einer abkuppelnden Stellung hin- und herbewegt werden zu können.

Insbesondere kann eine Schiebeführung 19 für das verstellbare Kupplungsteil 17 an der Mergereinheit 3 vorgesehen sein, um das verstellbare Kupplungsteil 17 auf das gegenüberliegende Kupplungsteil 18 zu und davon wegfahren zu können bzw. verschieben zu können. Die Schiebeführung 19 kann das Kupplungsteil 17 in einer Richtung liegend quer zur Fahrtrichtung verschieblich führen, wenn die beiden Mergereinheiten 3 in ihrer bestimmungsgemäßen, abgesenkten Arbeitsstellung sind.

Wie die Figuren 3 und 4 zeigen, kann ein Stellaktor 20 zum Verstellen des beweglichen Kupplungsteils 17 vorgesehen sein, wobei der Stellaktor 20 beispielsweise einen Hydraulikzylinder umfassen kann und/oder hydraulisch arbeitend ausgebildet sein kann. Der Stellaktor 20 kann einerseits an einem Rahmenteil der Mergereinheit 3 und andererseits an dem verstellbaren Kupplungsteil 17 angelenkt sein, um das Kupplungsteil 17 relativ zu der Mergereinheit 3 verstellen zu können.

Eine Steuervorrichtung 21 zum Steuern der An- und Abkuppelbewegung kann den Stellaktor 20 vollautomatisch oder halbautomatisch betätigen, wobei eine solche Steuervorrichtung 21 beispielsweise von einem Maschinenführerstand aus über ein entsprechendes Eingabemittel angesteuert werden kann.

Alternativ oder zusätzlich kann die Steuervorrichtung 21 aber auch sensorgesteuert arbeiten, wobei zumindest ein Sensor 22 einen Maschinen- und/oder Betriebsparameter erfassen kann, der eine Seitenschwadablage anzeigt und/oder vorliegt, wenn die Heuwerbungsmaschine in ihrer zusammengefahrenen Konfiguration für die Seitenschwadablage ist.

Beispielsweise kann ein solcher Sensor 22 das Vorliegen eines Seitenschwads, der von einem äußeren Ende einer der beiden Mergereinheiten abgelegt wird, erfassen, wobei der Sensor hierfür beispielsweise visuell arbeitend ausgebildet sein kann oder den Seitenschwad auch per Ultraschall abtasten kann. Alternativ oder zusätzlich kann auch ein Sensor 22 vorgesehen sein, der die Position der Mergereinheiten 3 relativ zueinander erfasst, insbesondere wenn diese in einem zusammengefahrenen Zustand sind. Beispielsweise kann ein solcher Sensor 22 das Spaltmaß zwischen den beiden Mergereinheiten 3 erfassen. Alternativ oder zusätzlich kann auch ein Sensor 22 vorgesehen sein, der eine Stellung und/oder einen Druck der Querverstelleinrichtung 14 erfasst.

Zeigt ein Sensorsignal des zumindest einen Sensors 22 an, dass die Maschine in Seitenschwadablage arbeitet bzw. dafür bereit ist, kann die Steuervorrichtung 21 den Stellaktor 20 ansteuern, um die Kupplungsteile 17 und 18 zusammenzufahren und die Mergereinheiten 3 über das Gelenk 15 miteinander zu verbinden. Die Steuervorrichtung 21 kann dabei derart ausgebildet sein, dass die Kupplungsteile 17, 18 erst dann eingekuppelt werden, wenn die Mergereinheiten 3 zusammengefahren sind. Alternativ hierzu kann die Steuervorrichtung 21 die Kupplungsteile 17, 18 aber auch schon dann in die Kupplungsstellung bzw. in die kuppelbereite Stellung fahren, wenn mit dem Zusammenfahren der Mergereinheiten 3 begonnen wird, wobei in diesem Fall das Verriegeln bzw. das in Eingriff Bringen der Kupplungsteile 17, 18 zumindest teilweise durch das Zusammenfahren der Mergereinheiten 3 erledigt wird.

Je nach Ausbildung des Stellaktors 20 kann dieser beispielsweise über ein Schaltventil betätigt und gesteuert werden. Bei elektrischer Ausbildung kann der Stellaktor 20 beispielsweise durch einen elektrischen Schaltkreis oder einen Schalter gesteuert werden.

Gegebenenfalls kann der Stellaktor 20 auch durch eine Folgesteuerung angesteuert bzw. betätigt werden, die in Abhängigkeit eines Druckzustands der Querverstelleinrichtung 14 arbeitet. Beispielsweise kann der Stellaktor 20 an die Druckversorgung der Querverstelleinrichtung 14 angebunden werden, insbesondere dergestalt, dass dann, wenn die Querverstellaktoren 13 bei Erreichen der zusammengefahrenen Stellung einen Druckanstieg erfahren, dieser Druckanstieg zu einer Betätigung des Stellaktors 20 führt, um die Kupplungsteile 17 und 18 zu schließen.

## Patentansprüche

1. Heuwerbungsmaschine in Form eines Mergers zum Schwaden und/oder Querversetzen von Erntegut, mit zumindest zwei Mergereinheiten (3), die jeweils einen Aufsammelförderer (4) zum Aufsammeln des Ernteguts vom Boden und einen Querförderer (5) zum Querfördern des aufgesammelten Ernteguts quer zur Fahrtrichtung umfassen, wobei die Mergereinheiten (3) jeweils um eine liegende, in Fahrtrichtung weisende Pendelachse (7) zur Bodenanpassung pendelnd aufgehängt sind und wobei zumindest eine der Mergereinheiten (3) zur wahlweisen Ablage eines Seitenschwads oder eines Mittenschwads quer zur Fahrtrichtung (6) verstellbar aufgehängt ist, so dass die zwei Mergereinheiten (3) wahlweise zusammen- und auseinanderfahrbar sind, wobei in der zusammengefahrenen Stellung zum Ablegen eines Seitenschwads Erntegut von einer Mergereinheit an die andere Mergereinheit übergebbar und in der auseinandergefahrenen Stellung zum Ablegen eines Mittenschwads Erntegut von beiden Mergereinheiten (3) in einem Ablagespalt zwischen den beiden auseinandergefahrenen Mergereinheiten (3) ablegbar ist, **dadurch gekennzeichnet, dass** zwischen den Mergereinheiten (3) zumindest ein ein- und auskuppelbares Gelenk (15) mit zwei in und außer Eingriff bringbaren Kupplungsteilen (17, 18) vorgesehen ist, von denen ein Kupplungsteil (17) an einer der Mergereinheiten (3) beweglich zwischen einer Kuppelstellung und einer Abkuppelstellung gelagert ist, so dass durch Verstellen des beweglichen Kupplungsteils (17) relativ zu der Mergereinheit (3), an der der bewegliche Kupplungsteil (17) befestigt ist, das Gelenk (15) ein- und auskuppelt, wobei das Gelenk (15) im eingekuppelten Zustand ein Abknicken der Mergereinheiten (3) relativ zueinander und Pendelbewegungen der Mergereinheiten (3) um ihre jeweilige Pendelachse (7) zulässt, andererseits aber einen Höhenversatz der Mergereinheiten (3) relativ zueinander im Bereich einer Übergabeschnittstelle (16) zwischen den beiden Mergereinheiten (3) verhindert oder zumindest begrenzt.

2. Heuwerbungsmaschine nach dem vorhergehenden Anspruch, wobei ein Stellaktor (20) zum Verstellen des Kupplungsteils (17) relativ zu der Mergereinheit (3), an der das Kupplungsteil (17) beweglich gelagert ist, vorgesehen ist.

3. Heuwerbungsmaschine nach dem vorhergehenden Anspruch, wobei der Stellaktor (20) zum aktiven Verstellen des Kupplungsteils (17) sowohl in die Kupplungsstellung als auch in die Abkuppelstellung doppelt wirkend ausgebildet ist.

4. Heuwerbungsmaschine nach einem der beiden vorhergehenden Ansprüche, wobei der Stellaktor (20) zumindest einen Druckmittelzylinder umfasst und/oder hydraulisch arbeitend ausgebildet ist.

5. Heuwerbungsmaschine nach einem der vorhergehenden Ansprüche, wobei von den beiden zusammenwirkenden Kupplungsteilen (17, 18) nur ein Kupplungsteil (17) beweglich an seiner Mergereinheit (3) gelagert und das andere Kupplungsteil (18) starr an seiner Mergereinheit (3) montiert ist.

6. Heuwerbungsmaschine nach einem der vorhergehenden Ansprüche, wobei das beweglich gelagerte Kupplungsteil (17) an der einen Mergereinheit (3) mittels einer Schiebeführung (19) verschieblich gelagert ist, wobei die genannte Schiebeführung (19) eine Verschiebung des Kupplungsteils (17) in einer Richtung auf das andere Kupplungsteil (18) zu und von diesem weg vorsieht.

7. Heuwerbungsmaschine nach dem vorhergehenden Anspruch, wobei die Schiebeführung (19) eine Verschiebebewegung des Kupplungsteils (17) in einer Richtung liegend quer zur Fahrtrichtung vorsieht.

8. Heuwerbungsmaschine nach einem der vorhergehenden Ansprüche, wobei eines der Kupplungsteile (17) ein zu dem anderen Kupplungsteil (18) offenes Kupplungsmaul aufweist, in das das andere Kupplungsteil (18) mit einem Kupplungsfinger oder einer Kupplungsklaue einfahrbar ist, wobei das genannte Kupplungsmaul einen aufrecht stehenden Öffnungsquerschnitt hat, von dem sich zwei liegend angeordnete, voneinander beabstandete Maulwandungen weg erstrecken.

9. Heuwerbungsmaschine nach einem der vorhergehenden Ansprüche, wobei eine Steuervorrichtung (21) zum automatischen Betätigen des Stellaktors in Abhängigkeit eines Sensorsignals eines Sensors (22) vorgesehen ist, das einen Seitenschwadablagebetrieb oder eine Bereitschaft zum Seitenschwadablagebetrieb der Mergereinheiten (3) angibt.

10. Heuwerbungsmaschine nach dem vorhergehenden Anspruch, wobei der Sensor (22) dazu ausgebildet ist,
- einen von einem äußeren Ende einer Mergereinheit (3) abgelegten Seitenschwad zu erfassen, und/oder
- einen Abstand zwischen den beiden Mergereinheiten (3) zu erfassen, und/oder
- einen Betriebsparameter, insbesondere eine Stellung und/oder einen Druckzustand, einer Querverstelleinrichtung (17) zum Querverstellen der Mergereinheiten (3) zu erfassen.

11. Heuwerbungsmaschine nach einem der vorhergehenden Ansprüche, wobei eine/die Steuervorrichtung (21) zum Betätigen des Stellaktors (20) dazu ausgebildet ist, die Kupplungshälften (17, 18) nur dann einzukuppeln oder in die einkuppelbereite Stellung zu verbringen, wenn die Mergereinheiten (3) für eine Seitenschwadablage zusammengefahren werden.

12. Heuwerbungsmaschine nach einem der vorhergehenden Ansprüche, wobei eine Folgesteuerung zum Betätigen des Stellaktors (20) vorgesehen und dazu ausgebildet ist, in Abhängigkeit eines Druckmittel-, insbesondere Hydraulikdrucks einer Querverstelleinrichtung (14) zum Querverstellen der Mergereinheiten (3) die Kupplungshälften (17, 18) ein- und auszukuppeln.

13. Heuwerbungsmaschine nach einem der vorhergehenden Ansprüche, wobei das Gelenk (15), insbesondere die Kupplungsteile (17, 18) auch im eingekuppelten Zustand in einer Richtung liegend quer zur Fahrtrichtung nachgiebig ausgebildet sind und/oder Spiel besitzen und in vertikaler Richtung Kraft übertragend ausgebildet sind und die Mergereinheiten (3) relativ zueinander auf gleichem Höhenniveau halten.

14. Heuwerbungsmaschine nach einem der vorhergehenden Ansprüche, wobei das Gelenk (15) an einer dem Aufsammelförderer (4) abgewandten Heckseite der Querförderer (5) angeordnet ist.

15. Heuwerbungsmaschine nach einem der vorhergehenden Ansprüche, wobei die Kupplungsteile (17, 18) in der Abkuppelstellung in Fahrtrichtung betrachtet innerhalb der Kontur der jeweiligen Mergereinheit angeordnet sind und/oder nicht quer über die Mergereinheit hinaus zum Mittenschwad vorspringen.

## Claims

1. Hay-making machine in the form of a merger for raking and/or transversely moving crops, comprising at least two merger units (3), which each comprise a collecting conveyor (4) for collecting the crops from the ground and a cross conveyor (5) for transversely conveying the collected crops transversely to the travel direction, wherein the merger units (3) are each suspended so as to swing about a horizontal swing axle (7) pointing in the travel direction to adapt to the ground, and wherein at least one of the merger units (3) is suspended to be adjustable transversely to the travel direction (6) in order to set down a side swath or a centre swath as desired, such that the two merger units (3) can be moved together and moved apart as desired, wherein, in the moved-together position, for setting down a side swath, crops can be transferred from one merger unit to the other merger unit and, in the moved-apart position, for setting down a centre swath, crops can be set down by both merger units (3) in a set-down gap between the two moved-apart merger units (3), **characterised in that**, between the merger units (3), at least one couplable and uncouplable joint (15) comprising two coupling parts (17, 18) that can be brought into and out of engagement is provided, of which one coupling part (17) is mounted on one of the merger units (3) so as to be movable between a coupling position and an uncoupling position such that, by adjusting the movable coupling part (17) relative to the merger unit (3) to which the movable coupling part (17) is fastened, the joint (15) is coupled and uncoupled, wherein, in the coupled state, the joint (15) allows the merger units (3) to be angled relative to one another and allows for swinging movements of the merger units (3) about their respective swing axles (7), but on the other hand prevents or at least limits a height offset of the merger units (3) relative to one another in the region of a transfer interface (16) between the two merger units (3).

2. Hay-making machine according to the preceding claim, wherein a control actuator (20) is provided for adjusting the coupling part (17) relative to the merger unit (3) on which the coupling part (17) is movably mounted.

3. Hay-making machine according to the preceding claim, wherein the control actuator (20) is configured to be double-acting for actively adjusting the coupling part (17) both into the coupling position and into the uncoupling position.

4. Hay-making machine according to any of the two preceding claims, wherein the control actuator (20) comprises at least one pressure medium cylinder and/or is configured to operate hydraulically.

5. Hay-making machine according to any of the preceding claims, wherein of the two interacting coupling parts (17, 18), just one coupling part (17) is movably mounted on its merger unit (3) and the other coupling part (18) is rigidly mounted on its merger unit (3).

6. Hay-making machine according to any of the preceding claims, wherein the movably mounted coupling part (17) is slidably mounted on one merger unit (3) by means of a sliding guide (19), wherein said sliding guide (19) provides for sliding of the coupling part (17) in a direction towards and away from the other coupling part (18).

7. Hay-making machine according to the preceding claim, wherein the sliding guide (19) provides a sliding movement of the coupling part (17) in a direction horizontally transverse to the travel direction.

8. Hay-making machine according to any of the preceding claims, wherein one of the coupling parts (17) comprises coupling jaws that are open towards the other coupling part (18), into which the other coupling part (18) can be inserted by a coupling finger or coupling claw, wherein said coupling jaws have an upright opening cross section, away from which two horizontally arranged, spaced-apart jaw walls extend.

9. Hay-making machine according to any of the preceding claims, wherein a control device (21) is provided for automatically actuating the control actuator on the basis of a sensor signal from a sensor (22), which indicates side-swath set-down operation or readiness for side-swath set-down operation of the merger units (3).

10. Hay-making machine according to the preceding claim, wherein the sensor (22) is configured
- to detect a side swath set down from an outer end of a merger unit (3), and/or
- to detect a spacing between the two merger units (3), and/or
- to detect an operating parameter, in particular a position and/or a pressure state, of a transverse-adjustment apparatus (17) for transversely adjusting the merger units (3).

11. Hay-making machine according to any of the preceding claims, wherein, for actuating the control actuator (20), a/the control device (21) is configured to only couple the coupling halves (17, 18) or bring them into the coupling-ready position when the merger units (3) are moved together for setting down a side swath.

12. Hay-making machine according to any of the preceding claims, wherein sequential control is provided for actuating the control actuator (20) and is configured to couple and uncouple the coupling halves (17, 18) on the basis of a pressure medium pressure, in particular a hydraulic pressure, of a transverse-adjustment apparatus (14) for transversely adjusting the merger units (3).

13. Hay-making machine according to any of the preceding claims, wherein the joint (15), in particular the coupling parts (17, 18), are also configured to be flexible in a direction horizontally transverse to the travel direction in the coupled state and/or have play and are configured to transmit force in the vertical direction and hold the merger units (3) at the same height relative to one another.

14. Hay-making machine according to any of the preceding claims, wherein the joint (15) is arranged on a rear side of the cross conveyor (5) facing away from the collecting conveyor(4).

15. Hay-making machine according to any of the preceding claims, wherein the coupling parts (17, 18) are arranged within the contour of the relevant merger unit in the uncoupling position when viewed in the travel direction and/or do not protrude transversely beyond the merger unit towards the centre swath.

## Revendications

1. Machine de fenaison sous la forme de groupe de regroupement pour andainer et/ou déplacer transversalement les récoltes, avec au moins deux unités de regroupement (3), qui comprennent chacune un convoyeur de collecte (4) pour collecter la récolte au sol et un convoyeur transversal (5) pour transporter transversalement la récolte collectée de manière transversale à la direction de déplacement, dans laquelle les unités de regroupement (3) sont chacune suspendues de manière oscillante autour d'un axe pendulaire horizontal (7) pointant dans la direction de déplacement pour une adaptation au sol et dans laquelle au moins une des unités de regroupement (3) est suspendue de manière réglable transversalement à la direction de déplacement (6) pour le dépôt optionnel d'un andain latéral ou d'un andain central de telle sorte que les deux unités de regroupement (3) peuvent être au choix regroupées ou séparées, dans laquelle, dans la position regroupée, pour déposer un andain latéral, la récolte peut être transférée depuis une unité de regroupement à l'autre unité de regroupement et, dans la position séparée, pour déposer un andain central, la récolte peut être déposée par les deux unités de regroupement (3) dans une fente de dépôt entre les deux unités de regroupement (3) écartées, **caractérisée en ce qu'**est prévue entre les unités de regroupement (3) au moins une articulation (15) pouvant être accouplée et désaccouplée avec deux pièces de couplage (17, 18) pouvant être amenées en prise et hors prise, dont au moins une pièce de couplage (17) est montée, sur une des unités de regroupement (3), de manière mobile entre une position de couplage et une position de découplage, de telle sorte que l'ajustement de la pièce de couplage (17) mobile par rapport à l'unité de regroupement (3), sur laquelle la pièce de couplage (17) mobile est fixée, permet d'accoupler et de désaccoupler l'articulation (15), dans laquelle l'articulation (15) autorise un pliage des unités de regroupement (3) l'une par rapport à l'autre et des mouvements pendulaires des unités de regroupement (3) autour de leur axe pendulaire (7) respectif, empêche ou limite au moins toutefois d'autre part un décalage en hauteur des unités de regroupement (3) l'une par rapport à l'autre dans la zone d'une interface de transfert (16) entre les deux unités de regroupement (3).

2. Machine de fenaison selon la revendication précédente, dans laquelle un actionneur (20) est prévu pour ajuster la pièce de couplage (17) par rapport à l'unité de regroupement (3), sur laquelle la pièce de couplage (17) est montée de manière mobile.

3. Machine de fenaison selon la revendication précédente, dans laquelle l'actionneur (20) est réalisé de manière à présenter une double action pour ajuster activement la pièce de couplage (17) aussi bien dans la position de couplage que dans la position de découplage.

4. Machine de fenaison selon l'une quelconque des deux revendications précédentes, dans laquelle l'actionneur (20) comprend au moins un vérin à fluide sous pression et/ou est réalisé de manière à présenter un fonctionnement hydraulique.

5. Machine de fenaison selon l'une des revendications précédentes, dans laquelle des deux pièces de couplage (17, 18) en coopération, une seule pièce de couplage (17) est montée de manière mobile sur son unité de regroupement (3) et l'autre pièce de couplage (18) est montée de manière rigide sur son unité de regroupement (3).

6. Machine de fenaison selon l'une quelconque des revendications précédentes, dans laquelle la pièce de couplage (17) montée de manière mobile est montée de manière à pouvoir coulisser sur une unité de regroupement (3) au moyen d'un guidage coulissant (19), dans laquelle ledit guidage coulissant (19) prévoit un coulissement de la pièce de couplage (17) dans une direction vers l'autre pièce de couplage (18) et de manière à s'éloigner de celle-ci.

7. Machine de fenaison selon la revendication précédente, dans laquelle le guidage coulissant (19) prévoit un déplacement par coulissement de la pièce de couplage (17) dans une direction transversale à la direction de déplacement.

8. Machine de fenaison selon l'une quelconque des revendications précédentes, dans laquelle une des pièces de couplage (17) présente une mâchoire de couplage ouverte sur l'autre pièce de couplage (18), dans laquelle l'autre pièce de couplage (18) peut être insérée avec un doigt de couplage ou une griffe de couplage, dans laquelle ladite mâchoire de couplage a une section transversale d'ouverture en position verticale, depuis laquelle s'étendent deux parois de mâchoire disposées horizontalement, et espacées l'une de l'autre.

9. Machine de fenaison selon l'une quelconque des revendications précédentes, dans laquelle un dispositif de commande (21) est prévu pour actionner automatiquement l'actionneur en fonction d'un signal de capteur d'un capteur (22), qui indique une opération de dépôt d'andain latéral ou une disponibilité pour un dépôt d'andain latéral des unités de regroupement (3).

10. Machine de fenaison selon la revendication précédente, dans laquelle le capteur (22) est réalisé pour
- détecter un andain latéral déposé par une extrémité extérieure d'une unité de regroupement (3), et/ou
- détecter une distance entre les deux unités de regroupement (3), et/ou
- détecter un paramètre de fonctionnement, en particulier une position et/ou un état de pression, d'un système d'ajustement transversal (17) pour l'ajustement transversal des unités de regroupement (3).

11. Machine de fenaison selon l'une quelconque des revendications précédentes, dans laquelle un/le dispositif de commande (21) destiné à actionner l'actionneur (20) est réalisé pour accoupler les moitiés de couplage (17, 18) ou les amener dans la position prête à l'accouplement seulement lorsque les unités de regroupement (3) sont assemblées pour un dépôt d'andain latéral.

12. Machine de fenaison selon l'une quelconque des revendications précédentes, dans laquelle une commande séquentielle est prévue pour actionner l'actionneur (20) et est réalisée pour, en fonction d'une pression de fluide sous pression, en particulier d'une pression hydraulique, d'un système d'ajustement transversal (14) pour l'ajustement transversal des unités de regroupement (3), accoupler et désaccoupler les moitiés de couplage (17, 18).

13. Machine de fenaison selon l'une quelconque des revendications précédentes, dans laquelle l'articulation (15), en particulier les pièces de couplage (17, 18), sont réalisées de manière flexible et/ou avec un jeu même lorsqu'elles sont accouplées dans une direction transversale à la direction de déplacement et sont réalisées de manière transmettre une force dans la direction verticale et maintiennent les unités de regroupement (3) les unes par rapport aux autres à la même hauteur.

14. Machine de fenaison selon l'une quelconque des revendications précédentes, dans laquelle l'articulation (15) est disposée sur un côté arrière du convoyeur transversal (5) opposé au convoyeur de collecte (4).

15. Machine de fenaison selon l'une quelconque des revendications précédentes, dans laquelle les pièces de couplage (17, 18) sont disposées, vues dans la position de découplage, dans la direction de déplacement, à l'intérieur du contour de l'unité de regroupement respective et/ou ne font pas saillie transversalement au-delà de l'unité de regroupement vers l'andain central.
